(19) Europäisches Patentamt
European Patent Office
Office européen des brevets

(11) **EP 2 980 757 B1**

(12) **EUROPEAN PATENT SPECIFICATION**

(45) Date of publication and mention
of the grant of the patent:
**17.10.2018 Bulletin 2018/42**

(51) Int Cl.:
***G06T 7/40*** (2017.01)

(21) Application number: **14178875.2**

(22) Date of filing: **29.07.2014**

(54) **Quantification and imaging methods of the echo-texture feature**

Quantifizierung und Visualisierung von Ultraschalltexturen

Quantification et visualisation des textures ultrasons

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.02.2016 Bulletin 2016/05**

(73) Proprietor: **AmCad BioMed Corporation Taipei 105 (TW)**

(72) Inventors:
• **Chang, King-Jen**
**Taichung City, Taiwan (R.O.C.) (TW)**
• **Chen, Chiung-Nein**
**Taipei 10002, Taiwan (R.O.C.) (TW)**
• **Chen, Kuen-Yuan**
**Taipei 10002, Taiwan (R.O.C.) (TW)**
• **Wang, Yu-Hsin**
**Taipei 105, Taiwan (R.O.C.) (TW)**
• **Huang, Kuo-Chen**
**Taipei 105, Taiwan (R.O.C.) (TW)**
• **Chen, Argon**
**Taipei 105, Taiwan (R.O.C.) (TW)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**US-A- 5 224 175     US-A- 5 743 266**

**Description**

**FIELD OF THE INVENTION**

The present invention relates to a system and a method for quantification and visualization. More particularly, the invention relates to a system and a method for quantifying and visualizing the echo texture feature.

**BACKGROUND OF THE INVENTION**

Ultrasound imaging is commonly used in medical imaging modality field. Because of the improvement of the image resolution and image digitization and the advantages of the non-invasiveness, the ultrasound imaging is been widely use on the screening and diagnosis of tumors, such as thyroid tumor, by the doctors. Furthermore, the ultrasound imaging is useful for diagnosing the tumors and making the treatment planning.

The ultrasonic feature of echo texture can be used to evaluate the properties of the tumor. Traditionally, the echo texture of the tumor is evaluated by the expert doctors based on their experience. However, the slight variations in the texture distribution on the ultrasound image are difficult to be observed and identified by the expert doctor.

Since the personal and subjective experience of each doctor, there are differences in the diagnostic results from doctor to doctor for the same tumor sonography.

Therefore, a scientific and objective quantification method or system, which can precisely analyze the echo texture of the tumor on the ultrasound images, is needed in clinical practice. Furthermore, if the scientific system is designed based on the quantifying and visualizing methods and algorithms to indentify the echo texture on the ultrasound image, the system would be more powerful to assist the doctor to make a reliable diagnosis.

US 5,224,175 describes a method and device for interpreting and processing medical ultrasound images. The mix of reflection coefficients in pixel windows is measured by determining the range and distribution of pixel gray scale values to establish "echoic texture" characteristics. These characteristics are compared with corresponding characteristics of known tissues. The degree of correlation allows a prediction of tissue characteristics of the examined window.

**SUMMARY OF THE INVENTION**

The present invention relates to a system in accordance with claim 7 and a method in accordance with claim 1 for visualizing an echo texture feature and provides a quantified index of the echo texture as the reference in the doctor's diagnosis. Moreover, the invention provides the information with the visualization of the echo texture that may improve the diagnostic efficiency of the medical professionals and ease their burden.

The method for visualizing an echo texture feature in accordance with the present invention comprises several steps. The method begins with obtaining an ultrasound image including a plurality of pixels, and each pixel on the ultrasound image contains a pixel value. In the next step, a region of interests (ROI) on the ultrasound image may be selected and a regional standard deviation of the pixel values of the pixels in the selected ROI is subsequently determined. Later on, pixels with a pixel value lower than a standard value are eliminated from the selected ROI. In this step, the standard value is a multiple of the regional standard deviation. Then, a set of local statistical parameters, including local mean, local variance, local coefficient of variation and their combination, for each of the pixels remaining in the selected ROI is generated. A $N^{th}$ set of local statistical parameters is calculated by the pixel values of a $N^{th}$ pixel point and the pixel points adjacent the $N^{th}$ pixel, and N here is a natural number from 1 to the number of the pixels remaining in the selected ROI. Finally, at least one echo texture index in accordance with the local statistical parameters is acquired.

The system for visualizing echo texture feature comprises an ultrasound image capture device, an image processing module, a display device, and an input device. The ultrasound image capture device is configured to acquire an ultrasound image comprising a plurality of pixels. Each pixel on the ultrasound image contains a pixel value. The image processing module, connected with the ultrasound image capture device, is configured to receive and process the ultrasound images. Moreover, the image processing module further comprises an analysis unit and a processing unit connected to the analysis unit. The display device, connected with the image processing module, is configured for displaying the ultrasound images. The input device, connected with the image processing module, is configured for defining a region of interests (ROI) on the ultrasound image.

Roles of the analysis unit and the processing unit in an embodied system for visualizing echo texture feature are described in chronological order. Firstly, the analysis unit is configured to receive a selected ROI on the ultrasound image. The processing unit is configured to determine a regional standard deviation of the pixel values in the selected ROI. The analysis unit is further configured to eliminate pixels having a pixel value lower than a standard value, a multiple of the regional standard deviation, from the selected ROI and generate a set of local statistical parameters for each of the pixels remaining in the selected ROI. A $N^{th}$ set of the local statistical parameters is calculated by the pixel values of the $N^{th}$ pixel points and the pixel points adjacent the $N^{th}$ pixel in the selected ROI. Note that N here is a natural number from 1 to the number of the pixels remaining in the selected ROI and the local statistical parameters includes a plurality of local means. The processing unit is also configured to obtain at least one echo texture index and at least one echo texture imaging intensity based on the local statistical parameters. The echo texture imaging intensity of one pixel is obtained by the absolute difference between a regional mean computed by the values of the pixels remaining in the selected ROI, and the local mean of that pixel. The last role of the analysis unit in the embodied system is to illustrate a color scale image of echo texture feature in accordance with the at least one echo texture index and the at least one echo texture imaging intensity.

One embodiment of the present invention is to quantify the echo texture and to obtain the echo texture indexes. In clinical practice, the echo texture indexes provide an accuracy of 74.8% on diagnosis of thyroid tumors.

## BRIEF DESCRIPTION OF THE DRAWINGS

FIG. 1 is a flow diagram illustrating a method for quantifying echo texture feature which is not part of the present invention.

FIG. 2 is an exemplary image comprising a region of interests (ROI) and a pixel set in accordance with at least one embodiment of the present invention.

FIG. 3 is an exemplary color scale for the imaging of the echo texture feature in accordance with at least one embodiment of the present invention.

FIG. 4A is an example of an original ultrasound image in accordance with at least one embodiment of the present invention.

FIG. 4B is an example of a visualized image representing the homogeneous texture distribution of echo texture feature in accordance with at least one embodiment of the present invention.

FIG. 5A is an example of an original ultrasound image in accordance with at least one embodiment of the present invention.

FIG. 5B is an example of a visualized image representing the heterogeneous texture distribution of echo texture feature in accordance with at least one embodiment of the present invention.

FIG. 6A is an example of an ultrasound image in accordance with at least one embodiment of the present invention.

FIG. 6B is an example of a visualized image of the echo texture feature, in a condition that the upper bound ($S_1$) is 1.125 and the lower bound ($S_2$) is 3, in accordance with at least one embodiment of the present invention.

FIG. 6C is an example of a visualized image of the echo texture feature, in a condition that the upper bound ($S_1$) is 1.5 and the lower bound ($S_2$) is 4, in accordance with at least one embodiment of the present invention.

FIG. 6D is an example of a visualized image of the echo texture feature, in a condition that the upper bound ($S_1$) is 1.875 and the lower bound ($S_2$) is 5, in accordance with at least one embodiment of the present invention.

FIG. 7A is an example of an original ultrasound image in accordance with at least one embodiment of the present invention.

FIG. 7B is an example of a visualized image representing the texture distribution of echo texture feature in accordance with at least one embodiment of the present invention.

FIG. 7C is an example of a visualized image representing the texture distribution of echo texture feature in accordance with a prior art known in the field.

FIG. 8 is a block diagram illustrating a system for quantifying and visualizing echo texture feature in accordance with at least one embodiment of the present invention.

## DETAILED DESCRIPTION OF THE INVENTION

The present invention relates to a system and a method for visualizing echo texture feature. More particularly, at least one embodiment relates to a system and a method for visualizing echo texture feature. The embodiments and drawings provided here show different aspects of the present invention. However, the present invention is limited to neither the embodiments nor the drawings thereof.

The method for visualizing echo texture feature may be implemented on an ultrasound device, an ultrasound device-associated computing system, or the system for visualizing echo texture feature described herein. The method of some embodiments may be provided as a program. The program may be stored in a MPU-readable storage medium or a device comprising the MPU-readable storage medium. Examples of the MPU-readable storage medium include, but not be limited to, a floppy disk, a hard disk, a compact disc, a Zip floppy disk, a magneto-optical (MO) disc, an IC chip, a RAM, or any storage medium well-known in the art.

An ultrasound device-associated computing system may comprise a display device, a processor, a RAM, an input device, and a storage device. The input device is configured for inputting information such as images, text, or commands to the computing system. The storage device is configured for storage of system software, application software, user information, or the programs in accordance with some embodiments. The storage device may be a hard disk, a compact disc, or an Internet-based remote database. The RAM is configured for temporary storage of information and ongoing software. The processor is configured for computing and processing information. The display device is configured for displaying the outputted information. The computing system may be used to perform some embodied methods for visualizing echo texture feature in accordance with the present invention. In these cases, the programs are loaded into the RAM of the computing system and the computing system may therefore initiate the processes to perform the embodied methods. The computing system may further display the results via the display device or store the results to the storage device.

The following embodiments are mainly based on ultrasound devices and other specific details. However, it will be apparent to one of ordinary skill in the art that the present invention may be practiced without these specific details. In other instances, well-known methods, procedures, components have not been described in detail so as not to unnecessarily obscure aspects of the embodiments.

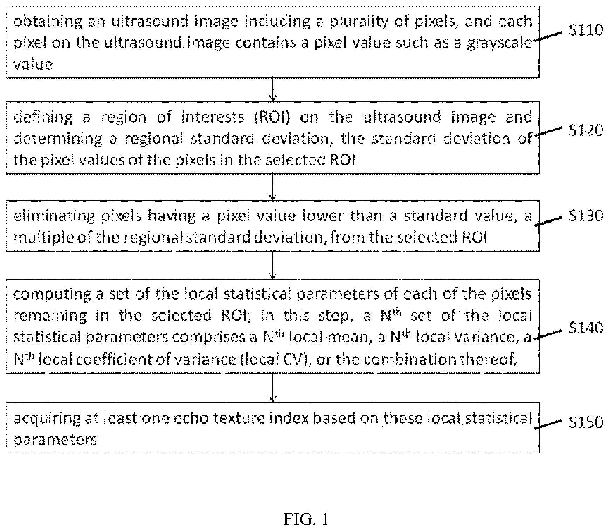

FIG. 1 is a flow diagram illustrating a method for quantifying echo texture feature. The method is to obtain an echo texture index indicating the ultrasonic texture distribution of an echo region. The method for quantifying echo texture comprises: obtaining an ultrasound image including a plurality of pixels, and each pixel on the ultrasound image contains a pixel value such as a grayscale value (S110); defining a region of interests (ROI) on the ultrasound image and determining a regional standard deviation, the standard deviation of the pixel values of the pixels in the selected ROI (S120); eliminating pixels having a pixel value lower than a standard value, a multiple of the regional standard deviation, from the selected ROI (S130); computing a set of the local statistical parameters of each of the pixels remaining in the selected ROI; in this step, a $N^{th}$ set of the local statistical parameters comprises a $N^{th}$ local mean, a $N^{th}$ local variance, a $N^{th}$ local coefficient of variance (local CV), or the combination thereof, N is a number from 1 to the number of the pixels remaining in the selected ROI (S140); and acquiring at least one echo texture index based on these local statistical parameters (S150).

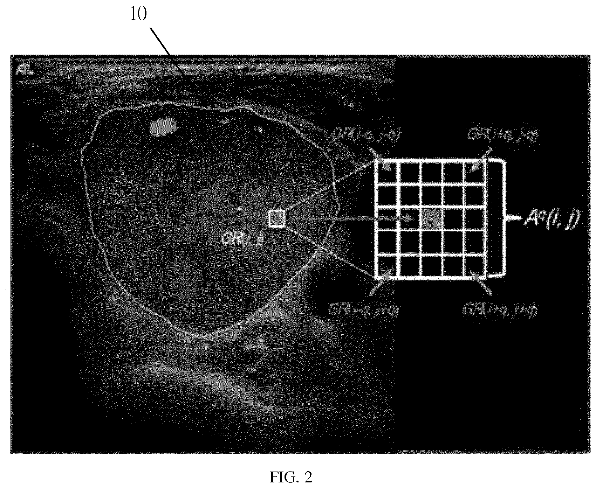

FIG. 2 is an exemplary image comprising a region of interests (ROI) and a set of pixels in accordance with at least one embodiment of the present invention. After acquiring an ultrasound image by an ultrasound device, a micro processing unit (MPU) in the ultrasound device or an ultrasound device-associated computing system may obtain the ultrasound image from the ultrasound device. The ultrasound image comprises a plurality of pixels, and each pixel contains a pixel value (S110). One may then define or select a region of interests 10, the area enclosed by a white contour in FIG. 2, on the ultrasound image (S 120). The region of interests 10 usually is a suspicious area or a region of interest (ROI) to the one who selects. In this embodiment, the ROI is a suspicious area of thyroid tumor. However, an ROI is not limited to the suspicious are of thyroid tumor in other embodiments.

In the next step, a regional standard deviation is determined based on the pixel values of all pixels in the selected ROI 10. As shown in FIG. 2, each block represents a pixel inside the region of interests 10. For a pixel located at $(i,j)$ in the region of interests 10, the pixel is denoted as $P(i,j)$ and the pixel value of $P(i,j)$ is denoted as $GR(i,j)$. The regional standard deviation (a) is the standard deviation of $GR(i,j)$ of the pixels in the region of interests 10, is denoted as $o'=_{std}(GR(i,j))$. In some embodiments, the regional standard deviation is of all the pixel values in the region of interests 10.

In some embodiments, contour of the region of interests 10 is contracted inwardly to form, for example, an annular region which is about 5-10 pixels in diameter. The contraction may exclude and diminish the interferences of the hypoechoic halo surrounding a thyroid tumor or any artificial variation. The pixels remaining in the redefined region may provide a preferable material for statistics, such as a regional standard deviation.

In some embodiments, pixels with pixel value falling within an interval are eliminated from the region of interests 10 to form a preferable material for statistics. The interval may be defined as, but not be limited to, the pixel values of an anechoic region. In some embodiments, the pixels with pixel value lower than a standard value are eliminated from the selected ROI (S130). The standard value here is defined as a multiple of the regional standard deviation ( ) and a multiplier (r), which may be described as r x cr. The multiplier (r) is varied based on the tissue properties of ultrasound imaging.

Then, a set of statistical parameters for each of the pixels remaining in the selected ROI 10 is computed (S 140). In some embodiments, the statistical parameters of a $N^{th}$ pixel is computed based on the pixels of a local area which consists of the $N^{th}$ pixel point and the pixel points adjacent the $N^{th}$ pixel. A $N^{th}$ local statistical parameters may include an $N^{th}$ local mean, a $N^{th}$ local variance, a $N^{th}$ local coefficient of variance (local CV), or the combination thereof. In these cases, N is a number from 1 to the number of the pixels remaining in the selected ROI 10. The local area is defined by a mask centered on a pixel. A set of pixels is covered by the mask, the mask may be a square matrix comprised by k columns and k rows. As shown in FIG. 2, the exemplary pixel is $P(i,j)$ and the pixel value of $P(i,j)$ is $GR(i,j)$. Moreover, the local area (mask) of $P(i,j)$ is a 5 x 5 square matrix. In other embodiments, elements in a square matrix, $A^q_{i,j}$, may be denoted as:

$$A_{i,j}^q = \left\{ \begin{matrix} P_{i-q,j-q} & \cdots & P_{i,j-q} & \cdots & P_{i+q,j-q} \\ \vdots & \ddots & \vdots & \cdot^{\cdot} & \vdots \\ P_{i-q,j} & \cdots & P_{i,j} & \cdots & P_{i+q,j} \\ \vdots & \cdot^{\cdot} & \vdots & \ddots & \vdots \\ P_{i-q,j+q} & \cdots & P_{i,j+q} & \cdots & P_{i+q,j+q} \end{matrix} \right\}$$

The square matrix, $A_{i,j}^q$, is a k $\times$ k matrix, and k = 2q + 1.

Then, at least one echo texture index may be obtained from the statistical parameters of each pixel (S150). The statistical parameters comprise the local mean of each pixel, the local variance of each pixel, the local CV of each pixel, or the combination thereof. The mean of the pixel values of pixels in $A_{i,j}^q$ is defined as a local mean or $\mu_{A_{i,j}^q}^2$, and the full formula is:

$$\mu_{A_{i,j}^q}^2 = \frac{\sum_{i'=i-q}^{i+q} \sum_{j'=j-q}^{j+q} \left( GR_{i',j'} \right)}{(2q+1)^2}$$

The variance of the pixel values of pixels in $A_{i,j}^q$ is defined as a local variance or $S_{A_{i,j}^q}^2$, and the full formula is:

$$S_{A_{i,j}^q}^2 = \frac{\sum_{i'=i-q}^{i+q} \sum_{j'=j-q}^{j+q} \left( GR_{i',j'} - \mu_{A_{i,j}^q}^2 \right)}{(2q+1)^2 - 1}$$

The coefficient of variation of the pixel values of pixels in $A_{i,j}^q$ is defined as a local CV or $CV_{A_{i,j}^q}^2$, and the full formula is:

$$CV_{A_{i,j}^q}^2 = \frac{S_{A_{i,j}^q}^2}{\mu_{A_{i,j}^q}^2} \times 100\%$$

However, the calculations of the statistical parameters will not be processed if a pixel point of the square matrix, $A^q_{i,j}$, is outside the region of interests 10.

In some embodiments, the quantification method is to obtain an overall echo texture index indicating the ultrasonic texture distribution of an echo area. For example, the local means and the local variances may be further transformed into a mean of the local variances (MOV) or a variance of the local variance (VOV), and the echo texture index may be the MOV, the VOV, or the result of Sqrt(V0V)/MOV. A high quantified value of echo texture index indicates a heterogeneous texture distribution in the region of interests 10.

In some embodiments, the local CVs may be further transformed into a mean of local CV (MOCV), and the echo texture index may be the MOCV. A high quantified value of echo texture index indicates a heterogeneous texture distribution in the selected ROI 10.

For a region with N pixels remaining in the selected ROI, the formula of a mean of the local variances is:

$$MOV_q = \frac{\sum_{v=1}^{n_q} \left( S_{A_v^q}^2 \right)}{n_q}$$

The formula of the variance of the local variances is:

$$VOV_q = \frac{\sum_{v=1}^{n_q}\left(S_{A_v^q}^2 - \overline{S_{A_v^q}^2}\right)}{n_q - 1}, \text{ and } \overline{S_{A_v^q}^2} = \frac{\sum_{v=1}^{n_q} S_{A_v^q}^2}{n_q}$$

The formula of the mean of local CV is:

$$MOCV_q = \frac{\sum_{v=1}^{n_q} CV_{A_v^q}^2}{n_q}$$

In some embodiments, the quantification method is able to obtain the echo texture index of the local area of each pixel within the selected ROI 10. The echo texture index is used for evaluating the local ultrasonic texture distribution of a local echo area in these cases. Visualization of the local echo texture index of each pixel may generate an image of echo texture. The visualized image of echo texture may assist the medical professionals in interpreting and diagnosing, and ease the burden of medical professions.

Based on the aforementioned quantification method, the visualization method of the present invention further comprises several steps, including the procedures for obtaining a regional mean ($\mu$') and a regional standard deviation ($\sigma$'). The regional mean here is the mean of pixel values of the pixels remaining in the selected ROI 10 after those anechoic pixels were eliminated. The steps also comprise the procedures for illustrating a color scale image of echo texture feature to show the texture information in the region of interests 10. The color scale image of echo texture feature is obtained from the echo texture indexes and echo texture imaging intensities. The echo texture imaging intensity of a pixel is the absolute difference between the regional mean and the local mean of that pixel. The echo texture imaging intensity of P(i,j) is denoted as $T_{i,j} = Abs(local\ Mean_{ij}-\mu')$. The color scale image of echo texture feature may be expressed in colors, for example, a homogeneous texture may be emphasized with blue color, and a heterogeneous texture may be emphasized with red color.

In some embodiments, the visualization method of the present invention further comprises several steps, including procedures for obtaining the visualized value ($V_{ij}$) of each pixel based on the echo texture imaging intensity, an upper limit (U), and a lower limit (L). The visualized value ($V_{i,j}$) of a pixel is 0 if the echo texture imaging intensity of the pixel exceeds the upper limit. The visualized value ($V_{ij}$) of a pixel is a pre-determined value if the echo texture imaging intensity of the pixel is lower than the lower limit. However, if the echo texture imaging intensity of a pixel falls within the upper limit and the lower limit, the visualized value ($V_{ij}$) of that pixel is denoted as (pre-determined value) x (U-$T_{ij}$)/(U-L). For example, if the pre-determined value is 230 in a case, the visualized value $V_{ij}$ of a pixel P(i,j) would be:

$$V_{i,j} = \begin{cases} 0, if\ T_{i,j} > U \\ 230, if\ T_{i,j<}L \\ 230 \times \left(U - T_{i,j}\right)/U - L, if\ L \leq T_{i,j} \leq U \end{cases}$$

In some embodiments, the visualization method of the present invention further comprises several steps, including procedures for determining an upper limit and a lower limit based on the mean of the local variances (MOV) and the variance of the local variances (VOV). The mean of the local variances (MOV) and the variance of the local variances (VOV) are obtained from the local means and the local variances. The mean of the local variances multiplied by the regional standard deviation ($\sigma$') and further divided by two divisors, the variance of the local variances and an upper bound ($S_1$), results in the upper limit. The mean of the local variances multiplied by the regional standard deviation ($\sigma$') and further divided by two divisors, the variance of the local variances and a lower bound ($S_2$), results in the lower limit. The upper bound ($S_1$) and the lower bound ($S_2$) are two adjustable factors each falls between 0.5 and 10.0, and the lower bound ($S_2$) is always more than the upper bound ($S_1$). An upper limit (U) and a lower limit (L) may be expressed as:

$$U = (MOV / VOV)\ x\ (\sigma')/(S_1)$$

$$L = (MOV/VOV) \times (\sigma')/(S_2)$$

In some embodiments, the upper limit and the lower limit are determined in part by the mean of local CV (MOCV) obtained from the local CVs. The reciprocal of the mean of local CVs (MOCV) multiplied by the regional standard deviation $(\sigma')$ and further divided by an upper bound $(S_1)$ results in the upper limit. The reciprocal of the mean of local CVs (MOCV) multiplied by the regional standard deviation $(\sigma')$ and further divided by a lower bound $(S_2)$ results in the lower limit. The upper bound $(S_1)$ and the lower bound $(S_2)$ are two adjustable factors each falls between 0.5 and 10.0, and the lower bound $(S_2)$ is always more than the upper bound $(S_1)$. The upper limit (U) and the lower limit (L) in these embodiments may be expressed as:

$$U = (1/MOCV) \times (\sigma')/(S0)$$

$$L = (1/MOCV) \times (\sigma')/(S_2)$$

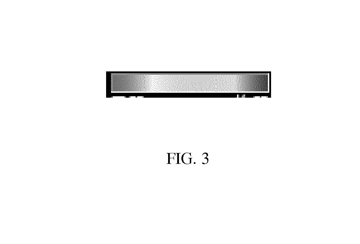

FIG. 3 is an exemplary color scale image of echo texture in accordance with at least one embodiment of the present invention. As shown in FIG. 3, the color of each pixel is determined by its visualized value ($V_{i,j}$) and a conversion from the HSV color model to the RGB color model. The colors in a color scale image of echo texture may be expressed in a color scales between red, orange, yellow, green and blue. The collection of each visualized value may form a color scale image of echo texture representing the echo texture distribution of the selected ROI on an ultrasound image.

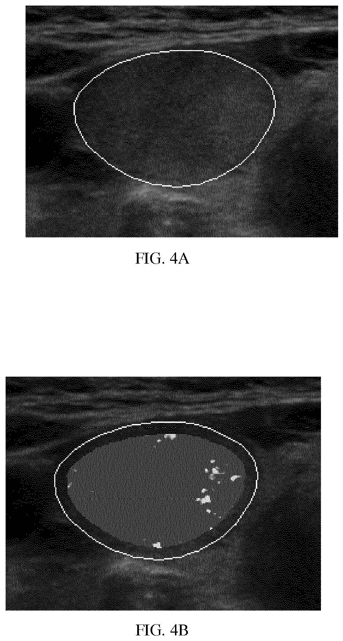

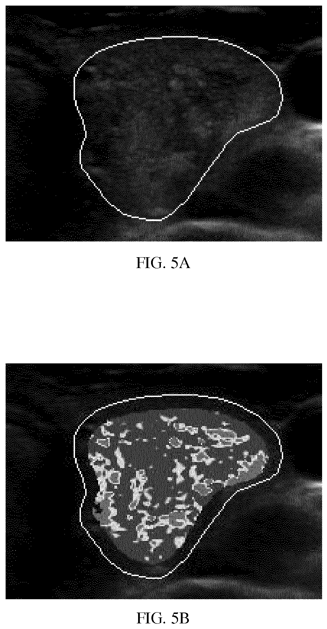

As shown in FIG. 4A, FIG. 4B, FIG. 5A, and FIG. 5B, these embodiments indicate that the method in accordance with the present invention provide the visualized images with the smooth color scales and more contrast between the heterogeneous texture and homogeneous texture. FIG. 4A and FIG. 5A represent the original images of FIG. 4B and FIG. 5B respectively. FIG. 4B is an exemplary visualized image to show a large coverage with blue color and represent a case with a homogeneous texture distribution. FIG. 5B is an exemplary visualized image to show a large coverage with red color and represent a case with a heterogeneous texture distribution.

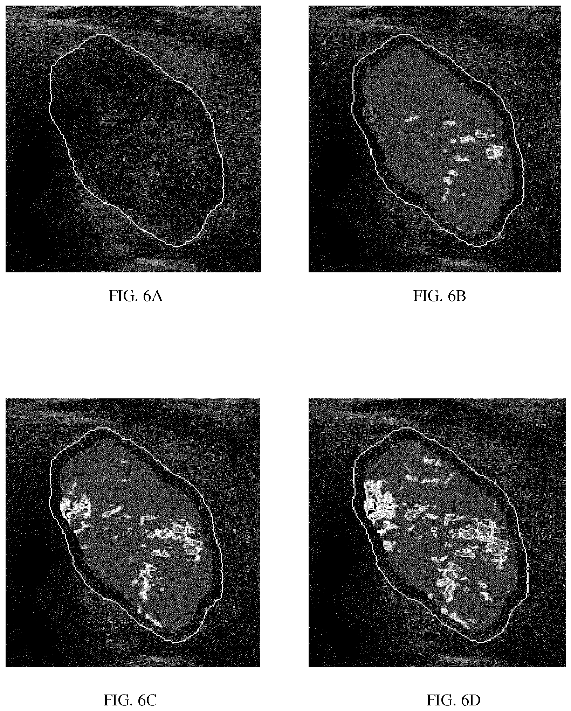

According to FIG. 6A, FIG. 6B, FIG. 6C, and FIG. 6D, the visualization method may enhance the contrast of image by adjusting the upper bound $(S_1)$ and the lower bound $(S_2)$. These embodiments indicate that the visualized image with high upper bound $(S_1)$ and high lower bound $(S_2)$ provides a contrast enhancement image. FIG. 6A represents the original ultrasound image, and the upper bound $(S_1)$ and the lower bound (S2) were increased as shown in FIG. 6B, FIG. 6C, and FIG. 6D.

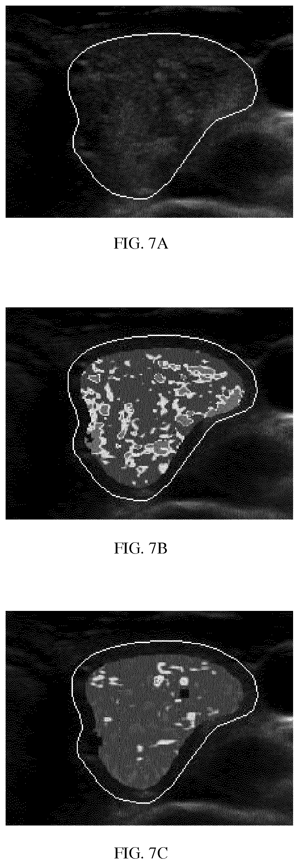

In some embodiments, the quantification and visualization method comprises steps for obtaining a preferable material for statistics. The steps comprise procedures for excluding regions containing invalid information from the region of interest. The quantification and visualization method also comprises steps for enhancing the contrast to emphasize the patterns in images. The steps comprise procedures for manipulating the adjustable factors, e.g. the upper bound and the lower bound and the procedures for converting the visualized values from the HSV color model to the RGB color model. As shown in FIG. 7A and FIG. 7B, the quantification and visualization method of the present invention provides a way to convert an original image into a contrast enhanced image. The contrast enhanced images may assist medical professions to identify the putative focuses with heterogeneity. Some embodiments of the present invention provide an accuracy of 74.8% on distinguishing the benign thyroid nodules from the malignant thyroid nodules. In contrast to FIG. 7C, an image came from a prior art with an accuracy of 60%, embodiments of the present invention possess large improvements on visualization and provide a clear image displaying the distribution of echo texture feature.

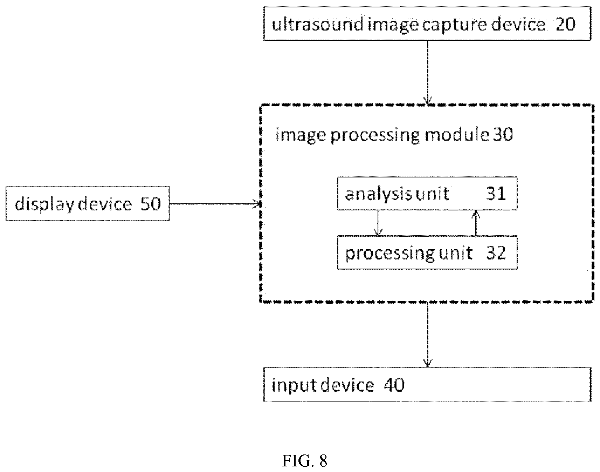

Some embodiments of the present invention relates to a system for visualizing the echo texture feature A. The system for quantifying and visualizing the echo texture feature A is configured for executing the aforementioned method for quantifying and visualizing the echo texture feature. The system for quantifying and visualizing the echo texture feature A may be divided as a quantification system and a visualization system. The quantification system and the visualization system comprise the same components but execute the different methods. The quantification system performs the aforementioned method for quantifying the echo texture feature; on the contrary, the visualization system performs the aforementioned method for visualizing the echo texture feature. FIG. 8 is a block diagram illustrating a system for quantifying and visualizing the echo patterns in accordance with at least one embodiment of the present invention. As shown in FIG. 8, the system in some embodiments comprises an ultrasound image capture device 20, an image processing module 30, a display device 50, and an input device 40.

The ultrasound image capture device 20 is configured to acquire ultrasound images. Each ultrasound image comprises a plurality of pixels, and each pixel contains a pixel value such as a grayscale value. The ultrasound image capture device 20 herein may be any ultrasound device capable of taking or capturing ultrasound images.

The image processing module 30 connected with the ultrasound image capture device 20 is configured to receive and process the ultrasound images. The image processing module 30 comprises an analysis unit 31 and a processing unit 32 connected to the analysis unit 31. The image processing module 30 may be any hardware or software devices to process the images and conduct the analysis and process procedures. An exemplary image processing module 30 is the software or the embedded system installed to an ultrasound image capture device 20. Another exemplary image processing module 30 is a computer or a graphics processing unit (GPU).

The display device 50 connected with the image processing module 30 is configured for displaying ultrasound images and the outputted information. The input device 40 connected with the image processing module 30 is configured for defining a region of interests (ROI) on an ultrasound image. The input device 40 may be any equipment to input text, images, or commands. An exemplary input device 40 is a mouse, a keyboard, an electronic writing pad, a touch screen, or a microphone.

The following embodiments involve the system for quantifying echo texture feature. An ultrasound image is displayed on the display device 50. Later on, a region of interests (ROI) on the ultrasound image is selected via the input device 40 and the selected ROI is subsequently received by the analysis unit 31. Then, the processing unit 32 determines a regional standard deviation, i.e. the standard deviation of the pixel values of the pixels in the region of interests. The analysis unit 31 further eliminates some pixels with the pixel value lower than a standard value in the selected ROI. The standard value here is a multiple of the regional standard deviation. Next, the processing unit 32 computes a set of local statistical parameters of each pixels remaining in the region of interests. In this step, an $N^{th}$ set of the local statistical parameters is calculated by the pixel values of the le pixel point and the pixel points adjacent the $N^{th}$ pixel in the selected ROI, and N represents a natural number from 1 to the number of the pixels remaining in the selected ROI. In the last step, the processing unit 32 acquires at least one echo texture index based on the local statistical parameters. In some configurations, the local statistical parameters may be a plurality of local coefficient of variances, a plurality of local means, a plurality of local variances, or the combination thereof. The statistical parameter and the echo texture index are obtained by the processing unit 32 in the way disclosed in the aforementioned method for quantifying the echo texture feature.

The following embodiments involve the system for visualizing the echo texture feature in accordance with the present invention. The embodiments comprise three stages and each stage comprises several steps. The first stage begins with an ultrasound image displayed on the display device 50. Later on, a region of interests (ROI) on the ultrasound image is selected via the input device 40 and the selected ROI is subsequently received by the analysis unit 31. Then, the processing unit 32 determines a regional standard deviation, i.e. the standard deviation of the pixel values of the pixels in the region of interests. The analysis unit 31 further excludes some pixels with a pixel value lower than a standard value in the region of interests. The standard value here is a multiple of the regional standard deviation. Next, the processing unit 32 computes a set of local statistical parameters of each of the pixels remaining in the region of interests. In this step, an $N^{th}$ set of the local statistical parameters is calculated by the pixel values of the $N^{th}$ pixel point and the pixel points adjacent the $N^{th}$ pixel in the selected ROI, and N represents a natural number from 1 to the number of pixels remaining in the region of interests. In the last step, the processing unit 32 acquires at least one echo texture index based on the local statistical parameters, Note that in these embodiments, the local statistical parameters comprise at least a plurality of local means. The second stage begins with that the processing unit 32 determines a regional mean, i.e. the mean of the pixel values of the pixels remaining in the region of interests. Afterward, the processing unit 32 further computes the absolute difference between the regional mean and the local mean of each pixel to obtain an echo texture imaging intensity of that pixel. In the last stage, the analysis unit 31 merges the echo texture indexes and the echo texture imaging intensity to illustrate a color scale image of echo texture feature. In some embodiments, the local statistical parameters may further comprise a plurality of local coefficient of variances and a plurality of local variances. The echo texture indexes and the echo texture imaging intensity are obtained by the processing unit 32 in the way disclosed in the aforementioned method for visualizing the echo texture feature.

In some embodiments, a visualized value may be obtained by comparing each texture imaging intensity to an upper limit and a lower limit by the analysis unit 31. The method for acquiring the visualized value and the method for comparing were disclosed in the aforementioned method for visualizing the echo texture feature. The upper limit and the lower limit may be acquired by the processing unit 32 in a way disclosed in the aforementioned method for visualizing the echo texture feature.

**Claims**

1. A method for visualizing an echo texture feature, comprising:

    obtaining an ultrasound image, wherein the ultrasound image comprises a plurality of pixels, wherein each pixel contains a pixel value;

defining a region of interests on the ultrasound image and determining a regional standard deviation, wherein the regional standard deviation is the standard deviation of the pixel values of the pixels in the region of interests; eliminating the pixels having the pixel values lower than a standard value in the region of interests, wherein the standard value is a multiple of the regional standard deviation; generating a set of local statistical parameters for each of the remaining pixels in the region of interests, wherein an $N^{th}$ set of local statistical parameters is obtained from the pixels within a local area composed of an $N^{th}$ pixel point and the pixels adjacent the $N^{th}$ pixel in the region of interests, and the $N^{th}$ pixel is one of the remaining pixels in the region of interests, N is a natural number from 1 to the number of the remaining pixels in the region of interests, and the local statistical parameters comprise a plurality of local means; obtaining at least one echo texture index in accordance with the local statistical parameters; generating a plurality of echo texture imaging intensities, wherein each of the echo texture imaging intensities represents an absolute difference between a regional mean and the local mean of each of the remaining pixels in the region of interests, and wherein the regional mean is a mean of the pixel values of the remaining pixels in the region of interests; and obtaining a color scale image of the echo texture feature by merging the at least one echo texture index and the echo texture imaging intensities.

2. The method as claimed in claim 1, further comprising:

comparing each of the echo texture imaging intensities to an upper limit and a lower limit; and generating visualized values from the step of comparing, wherein each of the visualized values is generated by the following formula:

$$\text{visualized value} = \begin{cases} 0, if\ T > U \\ PV, if\ T < L \\ PV \times (U-T)/(U-L), if\ L \leq T \leq U \end{cases};$$

wherein PV represents a pre-determined value, T represents the echo texture imaging intensity, U represents the upper limit, and L represents the lower limit.

3. The method as claimed in claim 2, wherein the local statistical parameters comprises local variances and the method further comprises:

generating a regional standard deviation of the pixel values of the remaining pixels in the region of interests; calculating a mean of the local variances and a variance of the local variances; and determining the upper limit and the lower limit, wherein the upper limit is determined by the following formula:

$$U = (MOV/VOV) \times (\sigma') / (S_1),$$

and the lower limit is determined by the following formula:

$$L = (MOV/VOV) \times (\sigma') / (S_2),$$

wherein U represents the upper limit, L represents the lower limit, MOV represents the mean of the local variances, VOV represents the variance of the local variances, $\sigma'$ represents the regional standard deviation, $S_1$ represents an upper bound, and $S_2$ represents a lower bound.

4. The method as claimed in claim 2, wherein the local statistical parameters comprises local coefficients of variance and the method further comprises:

generating a regional standard deviation of the pixel values of the remaining pixels in the region of interests; calculating a mean of the local coefficients of variance; and determining the upper limit and the lower limit, wherein the upper limit is determined by the following formula:

$$U = (1/MOCV) \times (\sigma')/(S_1),$$

and the lower limit is determined by the following formula:

$$L = (1/MOCV) \times (\sigma')/(S_2),$$

wherein U represents the upper limit, L represents the lower limit, MOCV represents the mean of the local CVs, $\sigma'$ represents the regional standard deviation, $S_1$ represents an upper bound, and $S_2$ represents a lower bound.

5. The method as claimed in claim 3 or 4, wherein the upper bound and the lower bound are two adjustable factors, and both fall between 0.5 and 10.0, and wherein the lower bound is always greater than the upper bound.

6. The method as claimed in claim 1, wherein the local area of the pixels is covered by a k-by-k square matrix, wherein k is a natural number.

7. A system for visualizing an echo texture feature, comprising:

an ultrasound image capture device configured to acquire an ultrasound image, wherein the ultrasound image comprises a plurality of pixels and each pixel contains a pixel value;

an image processing module connected with the ultrasound image capture device configured to receive and process ultrasound images, wherein the image processing module further comprises an analysis unit and a processing unit connected to the analysis unit;

a display device connected with the image processing module configured for display of the ultrasound images; and

an input device connected with the image processing module configured to define a region of interests on an ultrasound image;

wherein the analysis unit is configured to receive the region of interests, and the processing unit is configured to determine a regional standard deviation of the pixel values of the pixels in the region of interests;

wherein the analysis unit is further configured to eliminate the pixels having the pixel values lower than a standard value, a multiple of the regional standard deviation, in the region of interests, and the analysis unit is yet further configured to generate a set of local statistical parameters for each of the remaining pixels in the region of interests, an $N^{th}$ set of the local statistical parameters is obtained from the pixels within a local area composed of an $N^{th}$ pixel point and the pixel points adjacent the $N^{th}$ pixel in the region of interests, N is a natural number from 1 to the number of the remaining pixels in the region of interests and the local statistical parameters comprise a plurality of local means; and

wherein the processing unit is further configured to obtain at least one echo texture index based on the local statistical parameters, and the processing unit is yet further configured to generate a plurality of echo texture imaging intensities, wherein each of the echo texture imaging intensities represents an absolute difference between a regional mean and the local mean of each of the remaining pixels in the region of interests, wherein the regional mean is a mean of the pixel values of the remaining pixels in the region of interests; and

wherein the analysis unit is also configured to obtain a color scale image of the echo texture feature by merging the at least one echo texture index and the echo texture imaging intensities.

8. The system as claimed in claim 7, wherein the processing unit is further configured to compare each of the echo texture imaging intensities to an upper limit and a lower limit, and the processing unit is yet further configured to determine visualized values, and wherein each of the visualized values is determined by the following formula:

$$\text{visualized value} = \begin{cases} 0, if\ T > U \\ PV, if\ T < L \\ PV \times (U - T)/(U - L), if\ L \leq T \leq U \end{cases};$$

wherein PV represents a pre-determined value, T represents the echo texture imaging intensity, U represents the upper limit, and L represents the lower limit.

9. The system as claimed in claim 8, wherein the local statistical parameters comprises a plurality of local variances and the processing unit is further configured to generate a regional standard deviation of the pixel values of the remaining pixels in the region of interests and calculate a mean of the local variances and a variance of the local variances, and the processing unit is yet further configured to determine the upper limit and the lower limit, wherein the upper limit is determined by the following formula:

$$U = (MOV/VOV) \times (\sigma') / (S_1),$$

and the lower limit is determined by the following formula:

$$L = (MOV/VOV) \times (\sigma') / (S_2),$$

wherein U represents the upper limit, L represents the lower limit, MOV represents the mean of the local variances, VOV represents the variance of the local variances, $\sigma'$ represents the regional standard deviation, $S_1$ represents an upper bound, and $S_2$ represents a lower bound.

10. The system as claimed in claim 8, wherein the local statistical parameters comprises a plurality of local coefficients of variance and the processing unit is further configured to generate a regional standard deviation of the pixel values of the remaining pixels in the region of interests and calculate a mean of the local coefficient of variances, and the processing unit is yet further configured to determine the upper limit and the lower limit, wherein the upper limit is determined by the following formula:

$$U = (1/MOCV) \times (\sigma') / (S_1),$$

and the lower limit is determined by the following formula:

$$L = (1/MOCV) \times (\sigma') / (S_2),$$

wherein U represents the upper limit, L represents the lower limit, MOCV represents the mean of the local CVs, $\sigma'$ represents the regional standard deviation, $S_1$ represents an upper bound, and $S_2$ represents a lower bound.

11. The system as claimed in claim 9 and 10, wherein the upper bound and the lower bound are two adjustable factors, and both fall between 0.5 and 10.0, and wherein the lower bound is always greater than the upper bound.

**Patentansprüche**

1. Verfahren zum Visualisieren einer Ultraschalltextur, das umfasst
   Erhalten eines Ultraschallbilds, wobei das Ultraschallbild eine Vielzahl von Pixeln umfasst, wobei jedes Pixel einen Pixelwert aufweist;
   Definieren einer interessierenden Region auf dem Ultraschallbild und Bestimmen einer regionalen Standardabweichung, wobei die regionale Standardabweichung die Standardabweichung der Pixelwerte der Pixel in der interessierenden Region ist;
   Eliminieren der Pixel mit den Pixelwerten, die niedriger sind als ein Standardwert, in der interessierenden Region, wobei der Standardwert ein Mehrfaches der regionalen Standardabweichung ist;
   Erzeugen eines Satzes von lokalen statistischen Parametern für jedes der verbliebenen Pixel in der interessierenden Region, wobei ein $N^{ter}$ Satz von lokalen statistischen Parametern aus den Pixeln innerhalb eines lokalen Bereichs, der aus einem $N^{ten}$ Pixelpunkt und den Pixeln, die an das $N^{te}$ Pixel angrenzen, gebildet ist, in der interessierenden Region erhalten wird und das $N^{te}$ Pixel eines der verbliebenen Pixel in der interessierenden Region ist, N eine natürliche Zahl von 1 bis zu der Anzahl der verbliebenen Pixel in der interessierenden Region ist und die lokalen statistischen Parameter eine Vielzahl von lokalen Mittelwerten umfassen;
   Erhalten mindestens eines Texturindexes entsprechend den lokalen statistischen Parametern;
   Erzeugen einer Vielzahl von Ultraschalltextur-Bildgebungsintensitäten, wobei jede der Ultraschalltextur-Bildgebungsintensitäten eine absolute Differenz zwischen einem regionalen Mittelwert und dem lokalen Mittelwert jedes der verbliebenen Pixel in der interessierenden Region ist und wobei der regionale Mittelwert ein Mittelwert der Pixelwerte der verbliebenen Pixel in der interessierenden Region ist; und

Erhalten eines Farbskalenbilds jeder Ultraschalltextur durch Vereinigen des mindestens einen Ultraschalltexturindexes und der Ultraschalltextur-Bildgebungsintensitäten.

**2.** Verfahren nach Anspruch 1, das ferner umfasst:

Vergleichen jeder der Ultraschalltextur-Bildgebungsintensitäten mit einem oberen Grenzwert und einem unteren Grenzwert; und

Erzeugen von visualisierten Werten aus dem Schritt des Vergleichens, wobei jeder der visualisierten Werte durch die folgende Formel erzeugt wird:

$$\text{visualisierter Wert} = \begin{cases} 0, wenn\ T > U \\ PV, wenn\ T < L \\ PV\ x\ (U-T)/(U-L)\ wenn\ L \leq T \leq U; \end{cases}$$

wobei PV einen vorbestimmten Wert darstellt, T die Ultraschalltextur-Bildgebungsintensität darstellt, U den oberen Grenzwert darstellt und L den unteren Grenzwert darstellt.

**3.** Verfahren nach Anspruch 2, bei dem die lokalen statistischen Parameter lokale Varianzen umfassen und das Verfahren ferner umfasst:

Erzeugen einer regionalen Standardabweichung der Pixelwerte der verbliebenen Pixel in der interessierenden Region;

Berechnen eines Mittelwerts der lokalen Varianzen und einer Varianz der lokalen Varianzen; und

Bestimmen des oberen Grenzwerts und des unteren Grenzwerts, wobei der obere Grenzwert durch die folgende Formel bestimmt wird:

$$U = (MOV/VOV)\ x\ (\sigma')/(S_1),$$

und der untere Grenzwert durch die folgende Formel bestimmt wird:

$$L = (MOV/VOV)\ x\ (\sigma')/(S_2),$$

wobei U den oberen Grenzwert darstellt, L den unteren Grenzwert darstellt, MOV den Mittelwert der lokalen Varianzen darstellt, VOV die Varianz der lokalen Varianzen darstellt, σ' die regionale Standardabweichung darstellt, $S_1$ eine Obergrenze darstellt und $S_2$ eine Untergrenze darstellt.

**4.** Verfahren nach Anspruch 2, bei dem die lokalen statistischen Parameter lokale Varianzkoeffizienten umfassen und das Verfahren ferner umfasst:

Erzeugen einer regionalen Standardabweichung der Pixelwerte der verbliebenen Pixel in der interessierenden Region;

Berechnen eines Mittelwerts der lokalen Varianzkoeffizienten; und

Bestimmen des oberen Grenzwerts und des unteren Grenzwerts, wobei der obere Grenzwert durch die folgende Formel bestimmt wird:

$$U = (1/MOCV)\ x\ (\sigma')/(S_1),$$

und der untere Grenzwert durch die folgende Formel bestimmt wird:

$$L = (1/MOCV) \, x \, (\sigma')/(S_2),$$

wobei U den oberen Grenzwert darstellt, L den unteren Grenzwert darstellt, MOCV den Mittelwert der lokalen CVs darstellt, $\sigma'$ die regionale Standardabweichung darstellt, $S_1$ eine Obergrenze darstellt und $S_2$ eine Untergrenze darstellt.

5. Verfahren nach Anspruch 3 oder 4, bei dem die Obergrenze und die Untergrenze zwei einstellbare Faktoren sind, und beide zwischen 0,5 und 10,0 liegen, und wobei die Untergrenze immer größer ist als die Obergrenze.

6. Verfahren nach Anspruch 1, bei dem der lokale Bereich der Pixel von einer k-mal-k-Quadratmatrix bedeckt ist, wobei k eine natürliche Zahl ist.

7. System zum Visualisieren einer Ultraschalltextur, das umfasst:

eine Ultraschallbild-Aufnahmevorrichtung, die derart ausgeführt ist, dass sie ein Ultraschallbild erfasst, wobei das Ultraschallbild eine Vielzahl von Pixeln umfasst und jedes Pixel einen Pixelwert aufweist;
ein Bildverarbeitungsmodul, das mit der Ultraschallbild-Aufnahmevorrichtung verbunden ist, das derart ausgeführt ist, dass es Ultraschallbilder empfängt und verarbeitet, wobei das Bildverarbeitungsmodul ferner eine Analyseeinheit und eine Verarbeitungseinheit, die mit der Analyseeinheit verbunden ist, umfasst;
eine Anzeigevorrichtung, die mit dem Bildverarbeitungsmodul verbunden ist, die derart ausgeführt ist, dass sie die Ultraschallbilder anzeigt; und
eine Eingabevorrichtung, die mit dem Bildverarbeitungsmodul verbunden ist, die derart ausgeführt ist, dass sie eine interessierende Region auf einem Ultraschallbild definiert;
wobei die Analyseeinheit derart ausgeführt ist, dass sie die interessierende Region empfängt, und die Verarbeitungseinheit derart ausgeführt ist, dass sie eine regionale Standardabweichung der Pixelwerte der Pixel der interessierenden Region bestimmt;
wobei die Analyseeinheit ferner derart ausgeführt ist, dass sie die Pixel mit den Pixelwerten, die niedriger als ein Standardwert sind, ein Mehrfaches der regionalen Standardabweichung, in der interessierenden Region eliminiert, und die Analyseeinheit ferner derart ausgeführt ist, dass sie einen Satz von lokalen statistischen Parametern der verbliebenen Pixel in der interessierenden Region erzeugt, ein $N^{ter}$ Satz der lokalen statistischen Parameter aus den Pixeln innerhalb eines lokalen Bereichs, der aus einem $N^{ten}$ Pixelpunkt und den an das $N^{te}$ Pixel angrenzenden Pixelpunkten gebildet ist, in der interessierenden Region erhalten wird, N eine natürliche Zahl von 1 bis zu der Anzahl von verbliebenen Pixeln in der interessierenden Region ist und die lokalen statistischen Parameter eine Vielzahl von lokalen Mittelwerten umfasst; und
wobei die Verarbeitungseinheit ferner derart ausgeführt ist, dass sie mindestens einen Ultraschalltexturindex auf der Basis der lokalen statistischen Parameter erhält, und die Verarbeitungseinheit ferner derart ausgeführt ist, dass sie eine Vielzahl von Ultraschalltextur-Bildgebungsintensitäten erzeugt, wobei jede der Ultraschalltextur-Bildgebungsintensitäten eine absolute Differenz zwischen einem regionalen Mittelwert und dem lokalen Mittelwert jedes der verbliebenen Pixel in der interessierenden Region darstellt, wobei der regionale Mittelwert ein Mittelwert der Pixelwerte der verbliebenen Pixel in der interessierenden Region ist; und
wobei die Analyseeinheit ferner derart ausgeführt ist, dass sie ein Farbskalenbild der Ultraschalltextur durch Vereinigen des mindestens einen Ultraschalltexturindexes und der Ultraschalltextur-Bildgebungsintensitäten erhält.

8. System nach Anspruch 7, bei dem die Verarbeitungseinheit ferner derart ausgeführt ist, dass sie jede der Ultraschalltextur-Bildgebungsintensitäten mit einem oberen Grenzwert und einem unteren Grenzwert vergleicht, und die Verarbeitungseinheit ferner derart ausgeführt ist, dass sie visualisierte Werte bestimmt, und wobei jeder der visualisierten Werte durch die folgende Formel erzeugt wird:

$$\text{visualisierter Wert} = \begin{cases} 0, wenn \, T > U \\ PV, wenn \, T < L \\ PV \, x \, (U - T)/(U - L) \; wenn \; L \leq T \leq U; \end{cases}$$

wobei PV einen vorbestimmten Wert darstellt, T die Ultraschalltextur-Bildgebungsintensität darstellt, U den oberen Grenzwert darstellt und L den unteren Grenzwert darstellt.

9. System nach Anspruch 8, bei dem die lokalen statistischen Parameter eine Vielzahl von lokalen Varianzen umfassen und die Verarbeitungseinheit ferner derart ausgeführt ist, dass sie eine regionale Standardabweichung der Pixelwerte der verbliebenen Pixel in der interessierenden Region erzeugt und einen Mittelwert der lokalen Varianzen und eine Varianz der lokalen Varianzen berechnet, und die Verarbeitungseinheit ferner derart ausgeführt ist, dass sie den oberen Grenzwert und den unteren Grenzwert bestimmt, wobei der obere Grenzwert durch die folgende Formel bestimmt wird:

$$U = (MOV/VOV) \, x \, (\sigma')/(S_1),$$

und der untere Grenzwert durch die folgende Formel bestimmt wird:

$$L = (MOV/VOV) \, x \, (\sigma')/(S_2),$$

wobei U den oberen Grenzwert darstellt, L den unteren Grenzwert darstellt, MOV den Mittelwert der lokalen Varianzen darstellt, VOV die Varianz der lokalen Varianzen darstellt, $\sigma'$ die regionale Standardabweichung darstellt, $S_1$ eine Obergrenze darstellt und $S_2$ eine Untergrenze darstellt.

10. System nach Anspruch 8, bei dem die lokalen statistischen Parameter eine Vielzahl von lokalen Varianzkoeffizienten umfassen und die Verarbeitungseinheit ferner derart ausgeführt ist, dass sie eine regionale Standardabweichung der Pixelwerte der verbliebenen Pixel in der interessierenden Region erzeugt und einen Mittelwert der lokalen Varianzkoeffizienten berechnet, und die Verarbeitungseinheit ferner derart ausgeführt ist, dass sie den oberen Grenzwert und den unteren Grenzwert bestimmt, wobei der obere Grenzwert durch die folgende Formel bestimmt wird:

$$U = (1/MOCV) \, x \, (\sigma')/(S_1),$$

und der untere Grenzwert durch die folgende Formel bestimmt wird:

$$L = (1/MOCV) \, x \, (\sigma')/(S_2),$$

wobei U den oberen Grenzwert darstellt, L den unteren Grenzwert darstellt, MOCV den Mittelwert der lokalen CVs darstellt, $\sigma'$ die regionale Standardabweichung darstellt, $S_1$ eine Obergrenze darstellt und $S_2$ eine Untergrenze darstellt.

11. System nach Anspruch 9 und 10, bei dem die Obergrenze und die Untergrenze zwei einstellbare Faktoren sind, und beide zwischen 0,5 und 10,0 liegen, und wobei die Untergrenze immer größer ist als die Obergrenze.

**Revendications**

1. Procédé de visualisation d'un élément à texture échogène, comprenant :

l'obtention d'une image ultrasonore, dans lequel l'image ultrasonore comprend une pluralité de pixels, dans lequel chaque pixel contient une valeur de pixel ;
la définition d'une région d'intérêt sur l'image ultrasonore et la détermination d'un écart-type régional, dans lequel l'écart-type régional est l'écart-type des valeurs de pixel des pixels situés dans la région d'intérêt ;
l'élimination des pixels dont la valeur de pixel est inférieure à une valeur type dans la région d'intérêt, dans lequel la valeur type est un multiple de l'écart-type régional ;
la production d'un ensemble de paramètres statistiques locaux pour chacun des pixels restant dans la région d'intérêt, dans lequel un $N^e$ ensemble de paramètres statistiques locaux est obtenu à partir des pixels situés dans une zone locale composée d'un $N^e$ pixel et des pixels adjacents au $N^e$ pixel dans la région d'intérêt, et le $N^e$ pixel est l'un des pixels restants dans la région d'intérêt, N représente un entier naturel allant de 1 au nombre de pixels restant dans la région d'intérêt, et les paramètres statistiques locaux comprennent une pluralité de moyennes locales ;
l'obtention d'au moins un indice de texture échogène d'après les paramètres statistiques locaux ;
la production d'une pluralité d'intensités d'imagerie de la texture échogène, dans lequel chacune des intensités d'imagerie de la texture échogène représente une différence absolue entre une moyenne régionale et la moyenne locale de chacun des pixels restant dans la région d'intérêt, et dans lequel la moyenne régionale est une moyenne des valeurs de pixel des pixels restants dans la région d'intérêt ; et
l'obtention d'une image en échelle de couleurs de l'élément à texture échogène en fusionnant le au moins un indice de texture échogène et les intensités d'imagerie de la texture échogène.

2. Procédé selon la revendication 1, comprenant en outre :

la comparaison de chacune des intensités d'imagerie de la texture échogène à une limite supérieure et à une limite inférieure ; et
la production de valeurs visualisées à partir de l'étape de comparaison, dans lequel chacune des valeurs visualisées est produite par la formule suivante :

$$\text{valeur visualisée} = \begin{cases} 0, si\ T > U \\ PV, si\ T < L \\ PV \times (U - T)/(U - L)\,, si\ L \leq T \leq U \end{cases};$$

dans laquelle PV représente une valeur prédéterminée, T représente l'intensité d'imagerie de la texture échogène, U représente la limite supérieure et L représente la limite inférieure.

3. Procédé selon la revendication 2, dans lequel les paramètres statistiques locaux comprennent des variances locales et le procédé comprend en outre :

la production d'un écart-type régional des valeurs de pixel des pixels restant dans la région d'intérêt ;
le calcul d'une moyenne des variances locales et d'une variance des variances locales ; et
la détermination de la limite supérieure et de la limite inférieure, dans lequel la limite supérieure est déterminée par la formule suivante :

$$U = (MOV/VOV) \times (\sigma')/(S_1)\,,$$

et la limite inférieure est déterminée par la formule suivante :

$$L = (MOV/VOV) \times (\sigma')/(S_2),$$

dans lesquelles U représente la limite supérieure, L représente la limite inférieure, MOV représente la moyenne des variances locales, VOV représente la variance des variances locales, $\sigma'$ représente l'écart-type régional, $S_1$ représente une borne supérieure et $S_2$ représente une borne inférieure.

4. Procédé selon la revendication 2, dans lequel les paramètres statistiques locaux comprennent des coefficients de variance locaux et le procédé comprend en outre :

la production d'un écart-type régional des valeurs de pixel des pixels restant dans la région d'intérêt ;
le calcul d'une moyenne des coefficients de variance locaux ; et
la détermination de la limite supérieure et de la limite inférieure, dans lequel la limite supérieure est déterminée par la formule suivante :

$$U = (1/MOCV) \times (\sigma')/(S_1),$$

et la limite inférieure est déterminée par la formule suivante :

$$L = (1/MOCV) \times (\sigma')/(S_2),$$

dans lesquelles U représente la limite supérieure, L représente la limite inférieure, MOCV représente la moyenne des coefficients de variance locaux, $\sigma'$ représente l'écart-type régional, $S_1$ représente une borne supérieure et $S_2$ représente une borne inférieure.

**5.** Procédé selon la revendication 3 ou 4, dans lequel la borne supérieure et la borne inférieure sont deux facteurs ajustables et toutes deux se situent entre 0,5 et 10,0, et dans lequel la borne inférieure est toujours plus grande que la borne supérieure.

**6.** Procédé selon la revendication 1, dans lequel la zone locale des pixels est couverte par une matrice carrée de k sur k, dans lequel k représente un entier naturel.

**7.** Système de visualisation d'un élément à texture échogène, comprenant :

un dispositif de prise d'images ultrasonores configuré pour acquérir une image ultrasonore, dans lequel l'image ultrasonore comprend une pluralité de pixels et chaque pixel contient une valeur de pixel ;
un module de traitement d'images connecté au dispositif de prise d'images ultrasonores, configuré pour recevoir et traiter des images ultrasonores, dans lequel le module de traitement d'images comprend en outre une unité d'analyse et une unité de traitement connectée à l'unité d'analyse ;
un dispositif d'affichage connecté au module de traitement d'images, configuré pour l'affichage des images ultrasonores ; et
un dispositif d'entrée connecté au module de traitement d'images, configuré pour définir une région d'intérêt sur une image ultrasonore ;

dans lequel l'unité d'analyse est configurée pour recevoir la région d'intérêt et l'unité de traitement est configurée pour déterminer un écart-type régional des valeurs de pixel des pixels situés dans la région d'intérêt ;
dans lequel l'unité d'analyse est en outre configurée pour éliminer les pixels dont la valeur de pixel est inférieure à une valeur type, multiple de l'écart-type régional, dans la région d'intérêt, et l'unité d'analyse est encore en outre configurée pour produire un ensemble de paramètres statistiques locaux pour chacun des pixels restant dans la région d'intérêt, un $N^e$ ensemble des paramètres statistiques locaux est obtenu à partir des pixels situés dans une zone locale composée d'un $N^e$ pixel et des pixels adjacents au $N^e$ pixel dans la région d'intérêt, N représente un entier naturel allant de 1 au nombre de pixels restant dans la région d'intérêt et les paramètres statistiques locaux comprennent une pluralité de moyennes locales ; et
dans lequel l'unité de traitement est en outre configurée pour obtenir au moins un indice de texture échogène d'après les paramètres statistiques locaux, et l'unité de traitement est encore en outre configurée pour produire une pluralité d'intensités d'imagerie de la texture échogène, dans lequel chacune des intensités d'imagerie de la texture échogène représente une différence absolue entre une moyenne régionale et la moyenne locale de chacun des pixels restant dans la région d'intérêt, dans lequel la moyenne régionale est une moyenne des valeurs de pixel des pixels restants dans la région d'intérêt ; et
dans lequel l'unité d'analyse est également configurée pour obtenir une image en échelle de couleurs de l'élément à texture échogène en fusionnant le au moins un indice de texture échogène et les intensités d'imagerie de la texture échogène.

**8.** Système selon la revendication 7, dans lequel l'unité de traitement est en outre configurée pour comparer chacune des intensités d'imagerie de la texture échogène à une limite supérieure et à une limite inférieure, et l'unité de traitement est encore en outre configurée pour déterminer des valeurs visualisées, et dans lequel chacune des valeurs visualisées est déterminée par la formule suivante :

$$\text{valeur visualisée} = \begin{cases} 0, si\ T > U \\ PV, si\ T < L \\ PV \times (U - T)/(U - L), si\ L \leq T \leq U \end{cases} ;$$

dans laquelle PV représente une valeur prédéterminée, T représente l'intensité d'imagerie de la texture échogène, U représente la limite supérieure et L représente la limite inférieure.

9. Système selon la revendication 8, dans lequel les paramètres statistiques locaux comprennent une pluralité de variances locales et l'unité de traitement est en outre configurée pour produire un écart-type régional des valeurs de pixel des pixels restant dans la région d'intérêt et pour calculer une moyenne des variances locales et une variance des variances locales, et l'unité de traitement est encore en outre configurée pour déterminer la limite supérieure et la limite inférieure, dans lequel la limite supérieure est déterminée par la formule suivante :

$$U = (MOV/VOV) \times (\sigma')/(S_1) ,$$

et la limite inférieure est déterminée par la formule suivante :

$$L = (MOV/VOV) \times (\sigma')/(S_2),$$

dans lesquelles U représente la limite supérieure, L représente la limite inférieure, MOV représente la moyenne des variances locales, VOV représente la variance des variances locales, $\sigma'$ représente l'écart-type régional, $S_1$ représente une borne supérieure et $S_2$ représente une borne inférieure.

10. Système selon la revendication 8, dans lequel les paramètres statistiques locaux comprennent une pluralité de coefficients de variance locaux et l'unité de traitement est en outre configurée pour produire un écart-type régional des valeurs de pixel des pixels restant dans la région d'intérêt et pour calculer une moyenne des coefficients de variance locaux, et l'unité de traitement est encore en outre configurée pour déterminer la limite supérieure et la limite inférieure, dans lequel la limite supérieure est déterminée par la formule suivante :

$$U = (1/MOCV) \times (\sigma')/(S_1),$$

et la limite inférieure est déterminée par la formule suivante :

$$L = (1/MOCV) \times (\sigma')/(S_2),$$

dans lesquelles U représente la limite supérieure, L représente la limite inférieure, MOCV représente la moyenne des coefficients de variance locaux, $\sigma'$ représente l'écart-type régional, $S_1$ représente une borne supérieure et $S_2$ représente une borne inférieure.

11. Système selon les revendications 9 et 10, dans lequel la borne supérieure et la borne inférieure sont deux facteurs ajustables et toutes deux se situent entre 0,5 et 10,0, et dans lequel la borne inférieure est toujours plus grande que la borne supérieure.

obtaining an ultrasound image including a plurality of pixels, and each pixel on the ultrasound image contains a pixel value such as a grayscale value — S110

defining a region of interests (ROI) on the ultrasound image and determining a regional standard deviation, the standard deviation of the pixel values of the pixels in the selected ROI — S120

eliminating pixels having a pixel value lower than a standard value, a multiple of the regional standard deviation, from the selected ROI — S130

computing a set of the local statistical parameters of each of the pixels remaining in the selected ROI; in this step, a $N^{th}$ set of the local statistical parameters comprises a $N^{th}$ local mean, a $N^{th}$ local variance, a $N^{th}$ local coefficient of variance (local CV), or the combination thereof, — S140

acquiring at least one echo texture index based on these local statistical parameters — S150

FIG. 1

FIG. 2

FIG. 3

FIG. 4A

FIG. 4B

FIG. 5A

FIG. 5B

FIG. 6A

FIG. 6B

FIG. 6C

FIG. 6D

EP 2 980 757 B1

FIG. 7A

FIG. 7B

FIG. 7C

ultrasound image capture device 20

image processing module 30

analysis unit 31

processing unit 32

display device 50

input device 40

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5224175 A